Europäisches Patentamt

European Patent Office

Office européen des brevets

(19)

(11) Numéro de publication: **0 371 873**
**A1**

## (12) DEMANDE DE BREVET EUROPEEN

(21) Numéro de dépôt: **89403292.9**

(22) Date de dépôt: **28.11.89**

(51) Int. Cl.⁵: **G02B 27/00**

(30) Priorité: **30.11.88 FR 8815693**

(43) Date de publication de la demande:
**06.06.90 Bulletin 90/23**

(84) Etats contractants désignés:
**DE ES GB IT SE**

(71) Demandeur: **JAEGER**
**2, rue Baudin**
**F-92303 Levallois-Perret(FR)**

(72) Inventeur: **Migozzi, Jean Blaise**
**35 bis, rue du Général de Gaulle**
**F-91400 Orsay(FR)**
Inventeur: **Hallouin, Claude**
**10, rue Jean Bachelet**
**F-93360 Neuilly Plaisance(FR)**

(74) Mandataire: **Martin, Jean-Jacques et al**
**Cabinet REGIMBEAU 26, Avenue Kléber**
**F-75116 Paris(FR)**

(54) **Système optique du type afficheur tête moyenne ou tête haute pour véhicules automobiles.**

(57) La présente invention concerne un système optique du type afficheur tête moyenne ou tête haute pour véhicule automobile, caractérisé par le fait qu'il comprend des moyens (30) permettant de projeter des images dans des plans différents du champ de vision du conducteur.

FIG.4

# SYSTEME OPTIQUE DU TYPE AFFICHEUR TETE MOYENNE OU TETE HAUTE POUR VEHICULES AUTOMO-BILES.

La présente invention concerne le domaine des véhicules automobiles. Elle concerne plus précisément encore des systèmes du type afficheurs tête moyenne ou tête haute, destinés a être utilisés dans des véhicules automobiles.

Des systèmes du type afficheur tête moyenne ou tête haute sont utilisés notamment en aéronautique.

Les systèmes du type afficheur tête haute sont destinés à projeter des informations, à l'infini ou à grande distance, dans le champ de vision du paysage du pilote. Les systèmes du type afficeur tête haute permettent un gain appréciable en rapidité d'acquisation des informations ainsi projetées du fait que celles-ci peuvent être perçues par le pilote sans modification de l'axe de visée d'une part, et sans modification de l'accommodation ou de la convergence lors du passage paysage-informations.

Les systèmes du type afficheur tête moyenne ont pour but de projeter des informations, à l'infini ou à grande distance, dans le champ de vision des équipements situés au ras de la ligne de vision basse du champ de vision du paysage. Les systèmes du type afficheur tête moyenne permettent également un gain appréciable en rapidité d'acquisition des informations projetées. Ils requièrent certes une légère déviation de l'axe de la vision lors du passage paysage-informations. Cependant, comme les systèmes du type afficheur tête haute, ils ne requièrent aucune accommodation ou convergence lors du passage paysage-informations projetées.

Le but de la présente invention est de perfectionner les systèmes du type afficheur tête moyenne ou tête haute.

Ce but est atteint selon la présente invention grâce à un système optique du type afficheur tête moyenne ou tête haute pour véhicule automobile, caractérisé par le fait qu'il comprend des moyens permettant de projeter des images, dans des plans différents du champ de vision du conducteur.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente schématiquement la structure générale d'un système classique du type afficheur tête haute ou tête moyenne,

- les figures 2, 3 et 4 illustrent schématiquement la structure de systèmes conformes à différentes variantes de réalisation de la présente invention,

- la figure 5 représente schématiquement la structure d'un afficheur tête haute susceptible d'être utilisé dans le cadre de la présente invention,

- la figure 6 représente schématiquement l'implantation du même afficheur tête haute dans un véhicule automobile,

- la figure 7 représente schématiquement l'implantation d'un afficheur tête moyenne dans un véhicule automobile,

- la figure 8 représente une variante d'implantation d'un afficheur tête moyenne,

- la figure 9 représente schématiquement la structure de base d'un viseur tête moyenne susceptible d'être utilisé dans le cadre de la présente invention,

- les figures 10, 11 et 12 représentent schématiquement, respectivement en vue de face, vues de dessus et vues latérale la structure de base d'un autre afficheur tête moyenne susceptible d'être utilisé dans le cadre de la présente invention, et

- la figure 13 représente une vue schématique en coupe d'un mode de réalisation de moyens de décalage optique.

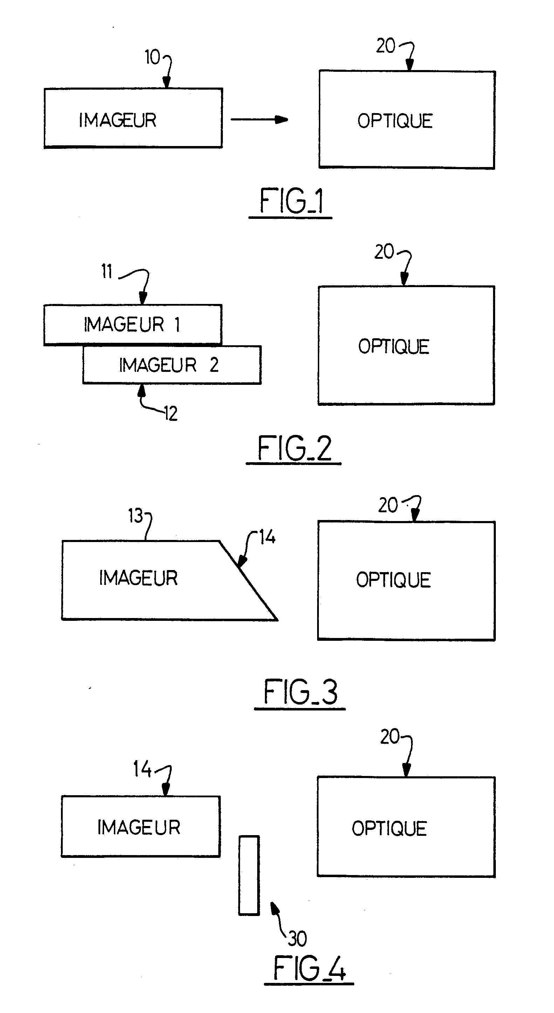

Comme cela est illustré schématiquement sur la figure 1, un système optique du type afficheur tête haute ou tête moyenne comprend classiquement un imageur 10 qui génère l'information à mettre à la disposition du conducteur, et un dispositif optique 20 qui projette ladite information issue de l'imageur à distance voulue. Le dispositif optique 20 sera dénommé collimateur par la suite.

Comme indiqué précédemment, la caractéristique essen tielle de la présente invention réside dans la présence de moyens permettant de projeter des images, dans des plans différents, dans le champ de vision du conducteur.

Cette caractéristique permet, d'une part, d'améliorer l'esthétique des informations mises à la disposition du conducteur du véhicule automobile. La caractéristique précitée permet par ailleurs, du fait que les informations sont projetées dans des plans différents, de "hiérarchiser" ces informations.

La Demanderesse propose différentes variantes de moyens permettant de projeter des images dans des plans différents.

Selon une première variante de réalisation de la présente invention, il est prévu des imageurs placés dans des plans objets différents du collimateur 20.

Sur la figure 2 on a ainsi illustré schématiquement deux imageurs 11, 12 placés dans des plans objets différents du collimateur 20.

Bien entendu il peut être prévu un nombre d'imageurs plus important placés dans des plans objets respectifs du collimateur 20.

Le cas échéant, l'imageur peut également générer une image inclinée sur l'axe optique du collimateur 20 de telle sorte que celui-ci projette non point plusieurs images dans des plans discrets différents du champ de vision du conducteur, mais une image ou des informations situées progressivement entre deux plans limites.

On a illustré schématiquement cette disposition sur la figure 3 sous forme d'un imageur 13 possédant un écran de sortie 14 incliné, c'est-à-dire non perpendiculaire, sur l'axe optique du collimateur 20.

Selon une seconde variante on peut prévoir un imageur 14 générant différentes informations situées dans un même plan image et des moyens optiques 30 intercalés en amont du collimateur 20 ou dans celui-ci, afin de décaler optiquement certaines de ces informations dans des plans objets différents du collimateur et obtenir une projection dans des plans différents du champ de vision du conducteur.

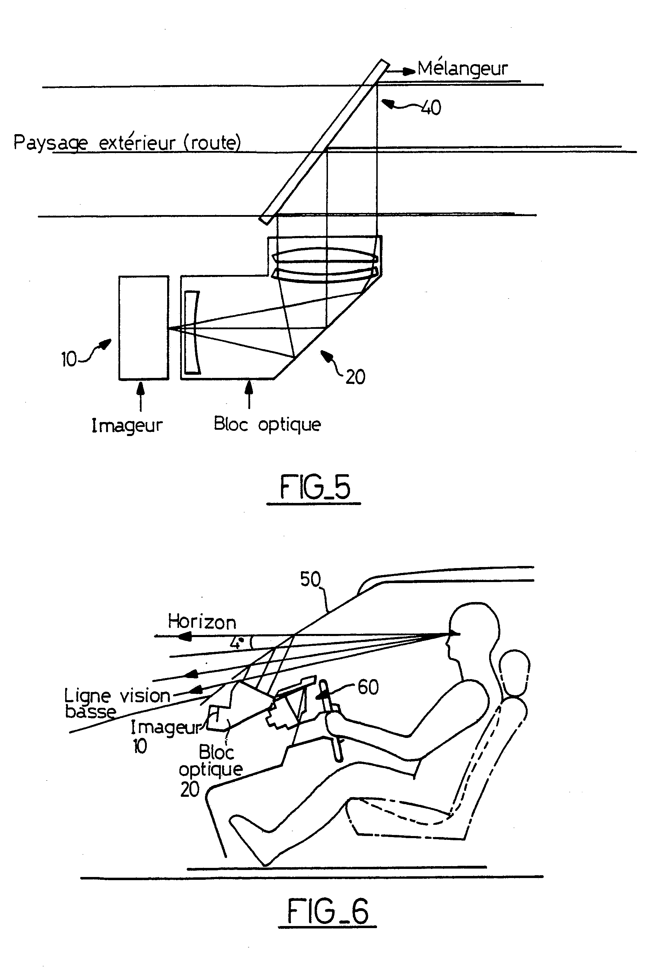

Selon un mode de réalisation avantageux, les moyens 30 comprennent au moins une lame transparente à faces parallèles, comme illustré schématiquement sur la figure 4.

L'homme de l'art comprendra aisément qu'une telle lame 30 à faces parallèles intercalée partiellement sur le trajet optique entre l'imageur 14 et le collimateur 20 assurera un retard optique des rayons qui le traverse, et par conséquent une projection d'informations dans des plans différents du champ de vision du conducteur.

Le cas échéant, les moyens 30 assurant un retard optique sur certains rayons lumineux peuvent être formés non point d'une lame à faces parallèles, mais d'un élément à faces non parallèles, du type prisme, afin d'opérer une variation progressive de retard optique, et par conséquent non pas seulement une projection d'informations dans des plans discrets différents du champ de vision du conducteur, mais la projection d'une image continue située dans le champ de vision entre deux plans limites.

L'imageur peut générer constamment la même information, par exemple l'image d'un paysage. Cependant, de préférence, dans le cadre de la présente invention, l'imageur génère des informations dynamiques. Pour cela l'imageur 11, 12, 13 ou 14 peut être formé d'un système à cristaux liquides, d'un sytème type fluorescent à cathode froide ou tout autre moyen fonctionnellement équivalent.

Selon une autre caractéristique avantageuse de l'invention, le système afficheur tête moyenne est orientable pour permettre d'adapter l'axe optique du système à tout conducteur potentiel.

De préférence, selon l'invention, le système afficheur tête moyenne est orientable autour d'un axe horizontal.

On a illustré schématiquement sur la figure 5 annexée, la structure de base d'un afficheur tête haute susceptible d'être utilisé dans le cadre de la présente invention. L'invention n'est pas limitée à cette structure précise.

On distingue sur la figure 5 annexée un imageur 10, un bloc optique formant collimateur 20 et un mélangeur 40. L'imageur a pour but de créer une image des informations à projeter. Comme indiqué précédemment, l'imageur 10 est formé très préférentiellement d'une cellule à cristal liquide.

Le bloc optique 20 a pour but de reporter à l'infini, ou du moins à grande distance, l'image issue de l'imageur.

Le mélangeur a pour but de superposer les informations ainsi projetées au paysage.

Le mélangeur 40 peut être formé du parebrise du véhicule. Cette disposition présente notamment les avantages suivants : pas de masque sur le paysage, bonne transmission du paysage, pas d'image parasite avec des réflexions multiples parebrise/mélangeur.

On notera que lorsque le mélangeur 40 est formé du parebrise du véhicule automobile, il est souhaitable d'utiliser un système asphérique de correction spécifique du modèle de parebrise.

En variante on peut également envisager d'utiliser un mélangeur 40 indépendant du parebrise, par exemple une lame semi-métallisée ou une lame holographique.

L'afficheur tête haute pour véhicule automobile conforme à la présente invention peut être utilisé pour fournir au conducteur des informations urgentes, par exemple des informations relatives au dégonflage d'un pneumatique, à une anomalie de freinage, à une anomalie de température moteur, au niveau d'huile ou d'essence, à la vitesse, au dépassement d'une vitesse maximale, à la présence d'un obstacle dans le brouillard, à une vitesse trop élevée à l'entrée d'un virage, à la nécessité de changer de route pour se conformer à un trajet choisi. Ces indications ne sont bien entendu pas limitatives.

L'utilisation d'un afficheur tête haute est particulièrement appréciable en cas de conduite à vitesse élevée ou lors de l'attaque d'un virage. L'afficheur tête haute permet en effet de superposer avec la route, à la disposition du conducteur, tout ou partie de la symbologie de conduite. A titre d'exemple préférentiel, mais non limitatif, l'imageur présente une luminance minimale de l'ordre de 20 000 Cd/m² pour une projection sur parebrise et 7 000 Cd/m² avec un mélangeur 40 indépendant du parebrise.

On a illustré schématiquement sur la figure 6 un mode d'implantation de l'imageur 10 et du bloc optique 20 pour un afficheur tête haute, dans un véhicule automobile. Selon la représentation préférentielle de la figure 6, l'imageur 10 et le bloc optique 20 sont placés entre le parebrise avant 50 du véhicule automobile et le tableau de bord 60. Cette disposition préférentielle n'est bien entendu pas limitative.

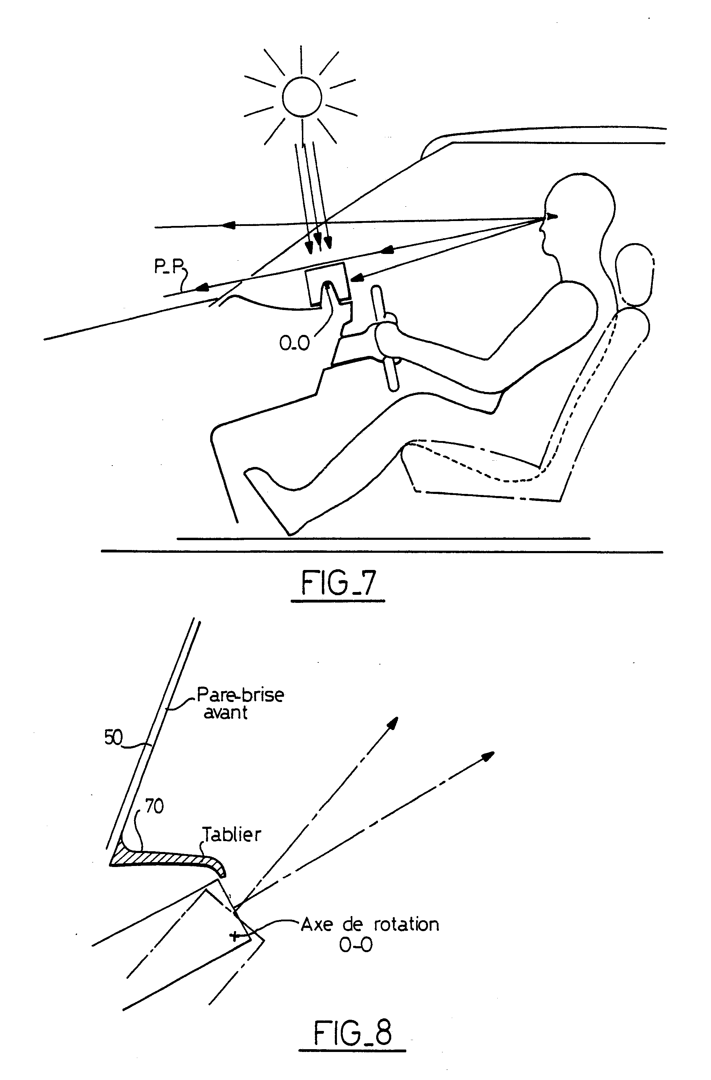

On a illustré schématiquement sur la figure 7 un afficheur tête moyenne implanté sur le tableau de bord du véhicule automobile juste en dessous de la ligne de vision basse du paysage P-P. L'afficheur tête moyenne est avantageusement orientable autour d'un axe horizontal O-O. Selon la représentation schématique de la figure 7 l'axe O-O est placé sensiblement à mi-longueur et mi-hauteur du boîtier de l'afficheur tête moyenne. Cependant, de préférence, l'axe de pivotement O-O de l'afficheur tête moyenne sera placé sur la face avant du boîtier, par exemple au niveau de son arête supérieure ou au niveau de son arête inférieure, afin de minimiser l'intervalle libre entre le boîtier de l'afficheur tête moyenne et le tableau de bord quel que soit le réglage en orientation du système.

On a illustré sur la figure 8 annexée un boîtier d'afficheur tête moyenne guidé à rotation autour d'un axe horizontal O-O coïncidant avec le bord avant du boîtier et un tablier 70 qui recouvre et masque le bord supérieur du boîtier quelle que soit la position de celui-ci.

Le collimateur de l'afficheur tête moyenne peut faire l'objet de nombreuses variantes de réalisation.

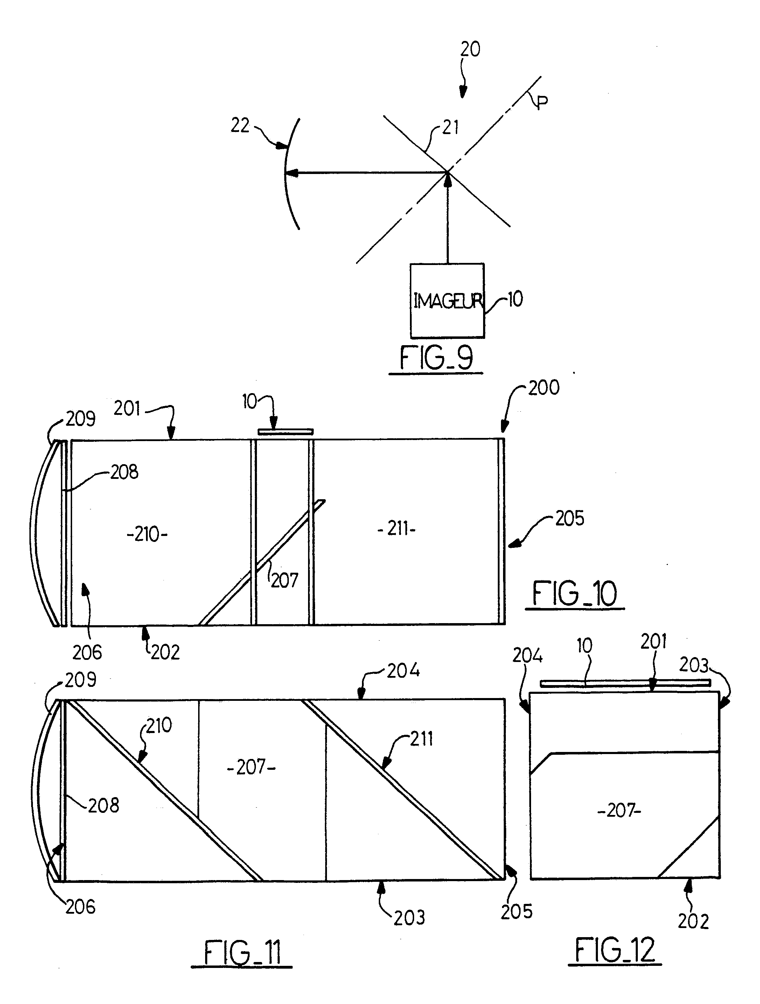

On a par exemple illustré schématiquement sur la figure 9 un collimateur 20 formé par combinaison d'une lame semi-réfléchissante 21 et d'un miroir concave 22, par exemple un miroir sphérique.

L'axe de l'imageur 10 et du miroir concave 22 sont symétriques par rapport à un plan P orthogonal au plan de la lame semi-réfléchissante 21. De préférence l'axe optique de l'imageur 10 et du miroir concave 22 sont orientés à 45° de ce plan de symétrie.

On a représenté sur les figures 10, 11 et 12 un mode de réalisation plus élaboré d'un collimateur pour afficheur tête moyenne.

Ce collimateur est placé dans un boîtier 200 généralement parallélépipédique.

Pour simplifer la description, en regard des figures 10, 11 et 12, on dénommera les faces 201, 202 du boîtier respectivement faces supérieure et inférieure, les faces 203, 204, respectivement gauche et droite, et les faces 205, 206, respectivement avant et arrière.

Bien entendu la dénomination des faces précitées n'est donnée qu'à titre arbitraire pour simplifier la description de la structure du système optique, et ne limite aucunement l'orientation spatiale du système optique à l'utilisation.

L'imageur 10 est placé en regard de la face supérieure 201 du boîtier, sensiblement à mi-longueur de cette face supérieure.

L'axe optique de l'imageur 10 s'étend avantageusement perpendiculairement à la face supérieure 201.

Le boîtier 200 loge une lame polarisante 207 placée en regard de l'imageur 10.

La lame polarisante 207 s'étend perpendiculairement aux faces gauche et droite 203, 204 et est inclinée de 45° par rapport aux faces supérieure 201 et inférieure 202, soit également par rapport à l'axe optique de l'imageur 10. Plus précisément, la lame polarisante 207 se rapproche de la face arrière 206 en éloignement de la face supérieure 201.

Une lame quart d'onde 208 est placée au niveau de la face arrière 206. La lame quart d'onde s'étend perpendiculairement aux faces supérieure 201, inférieure 202, ainsi qu'aux faces gauche et droite 203, 204.

Un miroir concave tel qu'un miroir sphérique 209 est placé sur l'extérieur de la lame quart d'onde 208. La concavité du miroir 209 est dirigée vers l'intérieur du boîtier 200, soit vers la lame quart d'onde 208. L'axe optique du miroir concave 209 est perpendiculaire à la lame quart d'onde 208.

Le boîtier 200 loge en outre une lame semi-polarisante 210 et un miroir plan 211.

Le miroir plan 211 est placé essentiellement entre la lame polarisante 207 et la face avant 205 du boîtier. La lame semi-polarisante 210 est placée essentiellement entre la lame quart d'onde 208 et la lame polarisante 207.

La lame semi-polarisante 210 et le miroir plan 211 s'étendent perpendiculairement aux faces supérieure et inférieure 201, 202, et sont inclinés à 45° par rapport aux faces latérales droite et gauche 203, 204.

Plus précisément encore, la lame semi-polarisante 210 et le miroir plan 211 se rapprochent de la face avant 205 en éloignement de la face droite 204.

Bien entendu la présente invention n'est pas limitée aux modes de réalisation particuliers qui viennent d'être décrits mais s'étend à toutes variantes conformes à son esprit.

En particulier la structure de base des collimateurs pour afficheur tête haute et tête moyenne n'est pas limitée aux dispositions précitées. Les structures de base des afficheurs tête haute et tête moyenne conformes à la présente invention pourront être inspirées des nombreux modes de réalisation des afficheurs tête moyenne et tête haute utilisés dans le domaine de l'avionique et publiés dans une littérature abondante.

On a évoqué précédemment des moyens optiques de décalage formés par exemple d'une lame en matériau transparent à faces parallèles ou non.

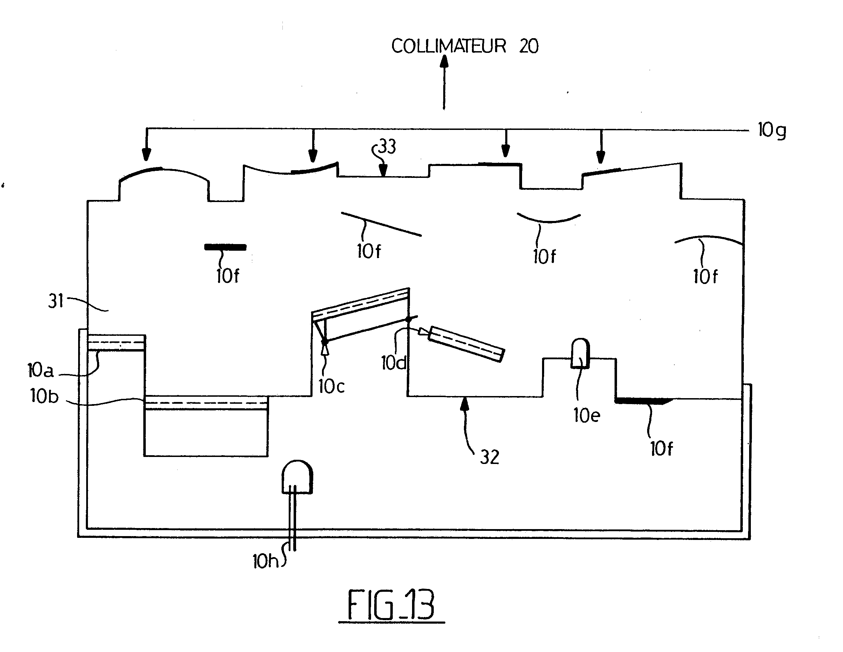

On peut combiner différentes lames à faces parallèles ou non, servant de moyens de décalage optique, sous forme d'un bloc unitaire de matériau transparent comme représenté sous la référence 31 sur la figure 13. Ce bloc unitaire 31 peut intégrer des imageurs fixes et/ou dynamiques. On a ainsi représenté sur la figure 5 annexée 3 cellules à cristaux liquides 10a, 10b, 10C, accolées à la face arrière étagée 32 du bloc 31, une cellule d'affichage à cristaux liquides 10d noyée dans le bloc 31, un afficheur dynamique du type LED 10e supporté par la face arrière du bloc 31, quatre éléments de décor fixes 10f noyés dans le bloc 31 et quatre autres éléments de décor fixes 10g supportés par la face avant étagée référencée 33 du bloc 31 et, enfin un éclaireur 10h supporté à l'arrière du bloc 31. La face avant 33 du bloc 31 fait face au collimateur 20. Le bloc 31 peut être réalisé sous forme d'un moulage ou de surmoulage d'un matériau plastique transparent, par exemple du PMM.

## Revendications

1. Système optique pour véhicule automobile du type afficheur tête moyenne ou tête haute comprenant de façon connue en soi, au moins un imageur (10) qui génère l'information à mettre à la disposition du conducteur et un dispositif optique (20) qui projette ladite information issue de l'imageur (10) à distance voulue caractérisé par le fait qu'il comprend des moyens (30) permettant de projeter des images dans des plans différents du champ de vision du conducteur.

2. Système optique selon la revendication 1, caractérisé par le fait qu'il comprend plusieurs imageurs (11, 12) aptes à générer des images dans des plans objets différents du collimateur (20).

3. Système optique selon la revendication 1, caractérisé par le fait qu'il comprend un imageur (13) apte à générer une image s'étendant entre deux plans objets d'un collimateur (20).

4. Système optique selon la revendication 1, caractérisé par le fait qu'il comprend un imageur (14) générant une image dans un plan image unique et des moyens optiques (30) aptes à décaler partiellement l'image issue de l'imageur dans des plans objets différents d'un collimateur (20).

5. Système optique selon la revendication 4, caractérisé par le fait que les moyens optiques de décalage comprennent une lame transparente à faces parallèles (30).

6. Système optique selon la revendication 4, caractérisé par le fait que les moyens optiques de décalage comprennent une lame à faces non parallèles du type prisme.

7. Système optique selon l'une des revendications 1 à 6, caractérisé par le fait qu'il comprend un imageur (10) générant constamment la même image.

8. Système optique selon l'une des revendications 1 à 6, caractérisé par le fait qu'il comprend un imageur (10) qui génère des informations dynamiques.

9. Système optique selon l'une des revendications 1 à 8, caractérisé par le fait qu'il est placé dans un boîtier orientable, de préférence par rotation autour d'un axe horizontal.

10. Système optique selon la revendication 9, caractérisé par le fait qu'il est placé dans un boîtier orientable par rotation autour d'un axe horizontal qui coïncide avec la face avant du boîtier.

11. Système optique selon l'une des revendications I à 10, caractérisé par le fait qu'il comprend un imageur (10) à cristaux liquides ou du type fluorescent à cathode froide.

12. Système optique selon l'une des revendications 1 à 11, caractérisé par le fait qu'il comprend un imageur (10) et un collimateur (200) comprenant :
- une lame polarisante (207) placée en regard de l'imageur à 45° de l'axe optique de celui-ci,
- une lame quart d'onde (208) placée en regard de la lame polarisante (207) à 45° de l'axe optique de celle-ci, soit parallèlement à l'axe de l'imageur,
- un miroir concave (209) placé en aval de la lame quart d'onde, avec son axe optique orthogonal à la lame quart d'onde,
- une lame semi-polarisante (210) et un miroir plan (211), parallèles entre eux, placés du même côté de la lame quart d'onde (208) que la lame polarisante (207), la lame semi polarisante (210) et le miroir plan (211) étant à la fois parallèles à l'axe de l'imageur et inclinés à 45° de la lame quart d'onde (208).

13. Système optique selon l'une des revendications 4, 5 et 6, caractérisé par le fait que les moyens optiques de décalage sont formés d'un bloc unitaire (31) en matériau transparent qui forme plusieurs lames à faces parallèles et/ou non parallèles et qui inclue ou supporte des imageurs fixes (10f, 10g) et/ou dynamiques (10a, 10b, 10c, 10d, 10e).

14. Système optique selon la revendication 13, caractérisé par le fait que le bloc de matériau transparent (31) est réalisé par moulage ou surmoulage de matériau plastique transparent.

10

IMAGEUR → OPTIQUE

20

## FIG_1

11

IMAGEUR 1

IMAGEUR 2

12

20

OPTIQUE

## FIG_2

13    14

IMAGEUR

20

OPTIQUE

## FIG_3

14

IMAGEUR

20

OPTIQUE

30

## FIG_4

→Mélangeur

40

Paysage extérieur (route)

10

20

Imageur

Bloc optique

FIG_5

50

Horizon

4°

Ligne vision basse

Imageur
10

Bloc optique
20

60

FIG_6

P.P

O.O

## FIG_7

Pare-brise
avant

50

70

Tablier

Axe de rotation
O-O

## FIG_8

FIG_9

FIG_10

FIG_11

FIG_12

COLLIMATEUR 20

10g

33

10f

10f

10f

10f

31

10a

10b

10c

10d

10e

32

10f

10h

EP 0 371 873 A1

<u>FIG_13</u>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 805 176 (HUGHES AIRCRAFT) <br> * Figures 1,2,6; revendications * | 1-4,7,8 | G 02 B 27/00 |
| A | | 11 | |
| Y | FR-A-1 312 282 (THOMSON-HOUSTON) <br> * Page 2, lignes 12-24; page 3, lignes 29-53; figures * | 1-4,7,8 | |
| A | PATENT ABSTRACTS OF JAPAN, vol. 9, no. 294 (M-431)[2017], 20 novembre 1985; & JP-A-60 131 328 (NISSAN JIDOSHA) <br> * Résumé * | 1,4,11 | |
| A | US-A-3 738 733 (PILKINGTON) <br> * Figures; revendications * | 1,2,4, 11 | |

DOMAINES TECHNIQUES RECHERCHES (Int. Cl.5)

G 02 B

Le présent rapport a été établi pour toutes les revendications

| Lieu de la recherche | Date d'achèvement de la recherche | Examinateur |
|---|---|---|
| LA HAYE | 06-02-1990 | PFAHLER R. |